Europäisches Patentamt

(19) **European Patent Office**

Office européen des brevets

(11) Numéro de publication: **0 049 195**
**B1**

# FASCICULE DE BREVET EUROPEEN

(12)

(45) Date de publication du fascicule du brevet:
**25.09.85**

(21) Numéro de dépôt: **81401477.5**

(22) Date de dépôt: **23.09.81**

(51) Int. Cl.⁴: **G 01 F 1/56**, G 01 F 1/60,
**G 01 P 5/18**

(54) **Capteur ionique à temps de transit entre une zone d'émission et une zone de réception.**

(30) Priorité: **30.09.80 FR 8020896**

(43) Date de publication de la demande:
**07.04.82 Bulletin 82/14**

(45) Mention de la délivrance du brevet:
**25.09.85 Bulletin 85/39**

(84) Etats contractants désignés:
**BE DE GB IT NL SE**

(56) Documents cités:
**FR - A - 2 389 103**
**FR - A - 2 439 302**
**US - A - 4 152 935**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Bariol, Roger, 10-14, rue de la Source,
F-45160 Olivet (FR)**
Inventeur: **Lecomte, Jackie, 1, rue des Minimes,
F-45000 Orleans (FR)**
Inventeur: **Bouvet, Jean-Marie, 133, rue de Silly,
F-92100 Boulogne Billancourt (FR)**

(74) Mandataire: **Colas, Jean-Pierre et al, 8 et 10 Avenue
Emile Zola, F-92109 Boulogne-Billancourt (FR)**

ACTORUM AG

# Description

La présente invention est relative à un capteur ionique à temps de transit entre une zone d'émission par ionisation et une zone de réception associé à une électronique de traitement, cet ensemble réalisant un dispositif de mesure de débit volumique d'un écoulement gazeux par repérage de particules ionisées.

Le capteur, objet de la présente invention, est du type anémomètre à temps de transit; il est destiné à mesurer un débit d'air en vue de contrôler la richesse du mélange air-carburant alimentant un moteur à combustion interne.

Le principe des anémomètres à temps de transit consiste à utiliser un nuage d'ions en tant que mobile entraîné à la même vitesse que l'écoulement gazeux, dont on mesure le temps de parcours entre un dispositif d'émission et un dispositif de réception. Le dispositif d'émission est en général un dispositif (pointe ou fil) alimenté par une impulsion de haute tension de courte durée et provoquant ainsi une ionisation locale. Le nuage de gaz ionisé ainsi formé provoque un signal induit par influence lors de son passage à travers un dispositif de réception.

Dans de nombreux cas, la mise en application de ce principe rencontre des difficultés.

D'une part, l'impulsion de haute tension (quelques kilovolts) sur le dispositif d'émission provoque par rayonnement direct sur le dispositif de réception une très forte tension, se superposant au signal induit réel et risquant de détruire le système électronique chargé d'amplifier ce signal induit. On peut y remédier en disposant une électrode de blindage électromagnétique en amont de l'électrode de réception comme décrit dans le brevet US-A-4 152 935.

De plus, la position géométrique du système d'émission dans l'écoulement gazeux provoque sur le plan aérodynamique des tourbillons et des sillages provoquant ainsi des instabilités du signal reçu, ce qui est un facteur d'erreur supplémentaire. Ce phénomène peut être corrigé par l'utilisation d'une grille transparente aux ions comme le suggère le brevet FR-A-2 389 103.

Enfin, il est connu que le débit d'air dans la tubulure d'admission d'un moteur thermique n'est pas continu mais pulsé, c'est-à-dire qu'à la valeur moyenne $Qv_{moy}$ se superpose une valeur variable sinusoïdale dont la fréquence est double de celle correspondant à la vitesse de rotation du moteur. Il est donc nécessaire dans ce cas que les mesures effectuées par le capteur soient faites à des instants privilégiés correspondant au passage du débit pulsé à la valeur moyenne $Qv_{moy}$. Il est donc nécessaire pour cela de mettre en œuvre un dispositif de commande électronique respectant ces conditions de fonctionnement, comme décrit notamment dans le brevet FR-A-2 439 302.

L'invention vise à éviter l'ensemble de ces inconvénients ainsi qu'un inconvénient supplémentaire auquel les documents précités n'apportent pas de solution, à savoir que le temps mesuré entre émission et réception est entaché d'erreurs du fait que le phénomène d'ionisation n'a lieu que pendant une partie de la durée de l'impulsion haute tension et que les phénomènes d'ionisation et de déplacement de l'écoulement gazeux se superposent. La présente invention a, entre autres, également pour but de fournir un capteur ionique qui permette de mesurer directement la valeur moyenne $Qv_{moy}$ d'un débit pulsé.

A cet effet, l'invention a pour objet un capteur ionique de débit d'air à temps de transit entre une zone d'émission par ionisation et une zone de réception associée respectivement à un générateur d'impulsions à haute tension comportant des moyens de déclenchement liés à la position d'un vilebrequin moteur, de mise en forme et de commande par microprocesseur réglés de manière à permettre la mesure d'un débit pulsé à des instants privilégiés correspondant au passage à la valeur moyenne $Qv_{moy}$ du débit volumique, et à un détecteur de temps de transit des particules ionisées, dans lequel une grille 19 de réception appartenant à la zone de réception est protégée par un blindage électrostatique transparent aux particules ionisées et l'ensemble des moyens de réception est amovible et réglable en position relativement au sens d'écoulement des particules ionisées, ledit détecteur comprenant en outre des moyens pour engendrer un retard sur la mesure du temps de transit t entre zone d'émission et zone de réception permettant de linéariser la courbe $1/t = f(Qv_{moy})$.

Ce capteur ionique à temps de transit permet d'obtenir une grandeur électrique sous forme d'une impulsion dont la largeur est fonction du débit volumique Qv selon la relation linéaire $1/t = k.Qv_{moy}$ dans laquelle k est une constante. Par ailleurs, ce capteur permet d'éviter, d'une part, l'influence de la haute tension et, d'autre part, d'améliorer la qualité de l'écoulement aérodynamique permettant ainsi d'obtenir des signaux électriques stables.

L'invention sera mieux comprise à l'étude de la description détaillée d'un mode de réalisation pris à titre d'exemple nullement limitatif et illustré par les dessins annexés, sur lesquels:

la fig. 1 représente un schéma synoptique d'ensemble d'un capteur ionique de débit associé à une électronique de traitement;

la fig. 2 est une vue en coupe d'un capteur ionique selon l'invention;

la fig. 3 représente schématiquement le détecteur de temps de transit du nuage ionisé, selon l'invention;

la fig. 4 illustre la forme des signaux obtenus en différents points des circuits illustrés par le schéma synoptique de la fig. 1;

la fig. 5 représente schématiquement le dispositif électronique permettant d'alimenter le système d'émission à partir des signaux de vitesse du vilebrequin selon la loi de décalage telle qu'explicitée ci-après;

la fig. 6 illustre également la forme de signaux en différents points des circuits illustrés par le schéma de la fig. 1.

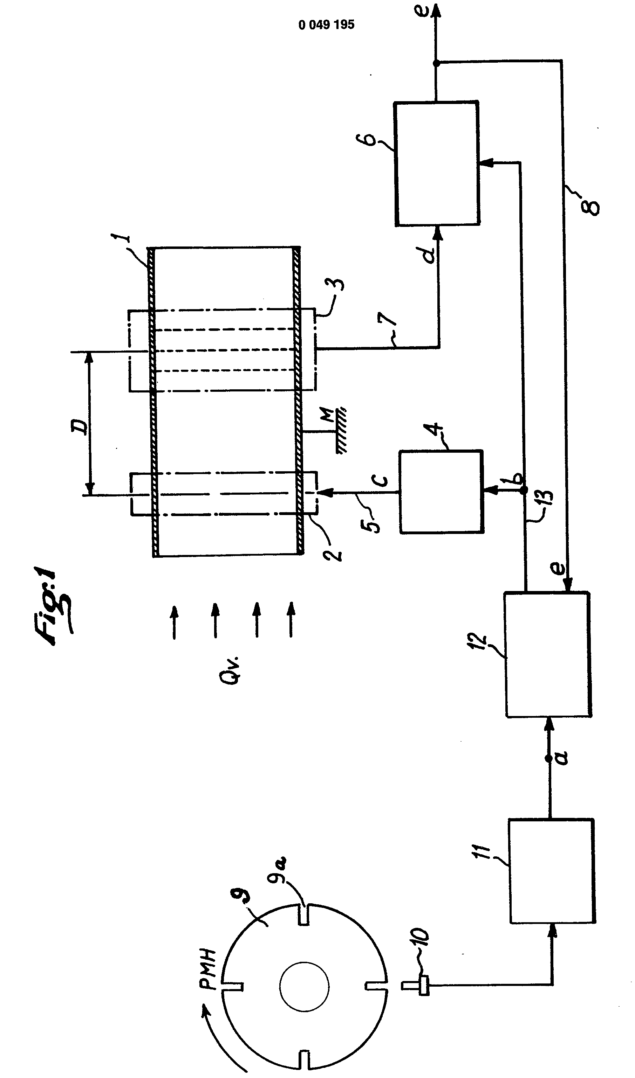

Comme représenté à la fig. 1, le capteur ionique à temps de transit se compose d'une enveloppe métallique 1, reliée à la masse par la connexion M, à l'intérieur de laquelle circule le gaz dont le débit volumique est Qv. Le corps métallique 1 comprend deux zones de fonctionnement: une zone d'émission 2 et une zone de réception 3, espacée d'une distance D.

La zone d'émission 2 du capteur est alimentée par une impulsion de haute tension C issue d'un bloc haute tension 4 et véhiculée par la connexion 5.

La zone de réception 3 du capteur délivre un signal d par l'intermédiaire d'une connexion 7, à un détecteur de temps de transit 6.

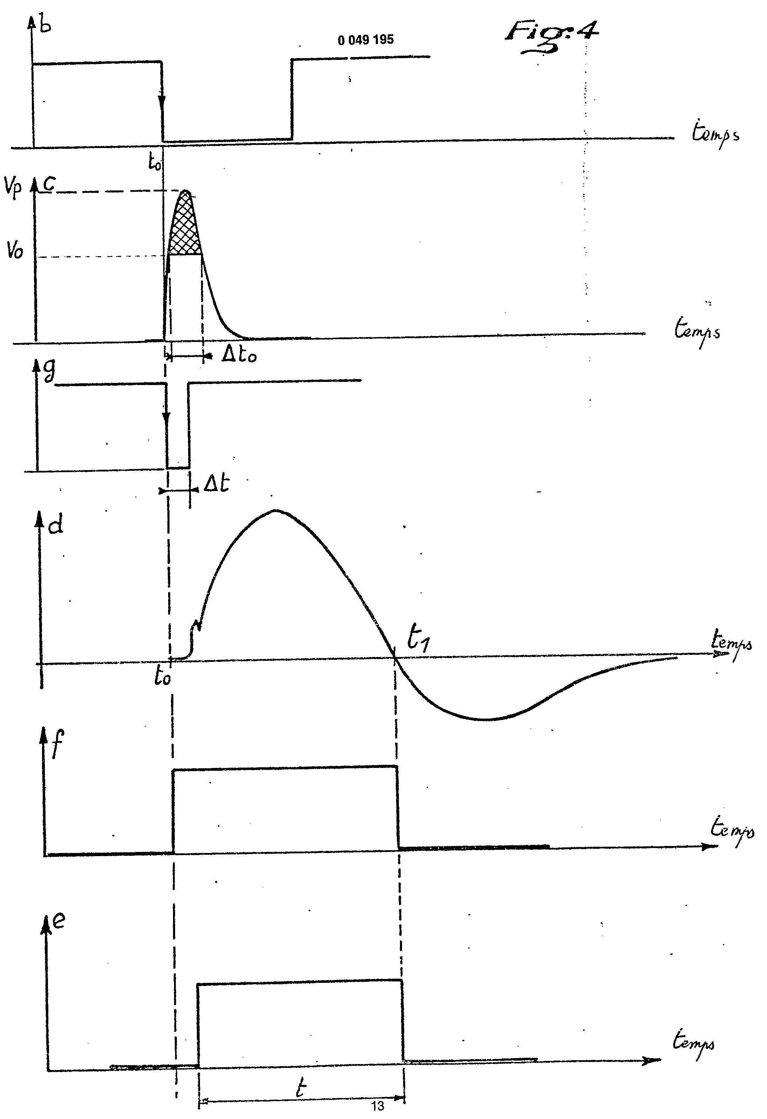

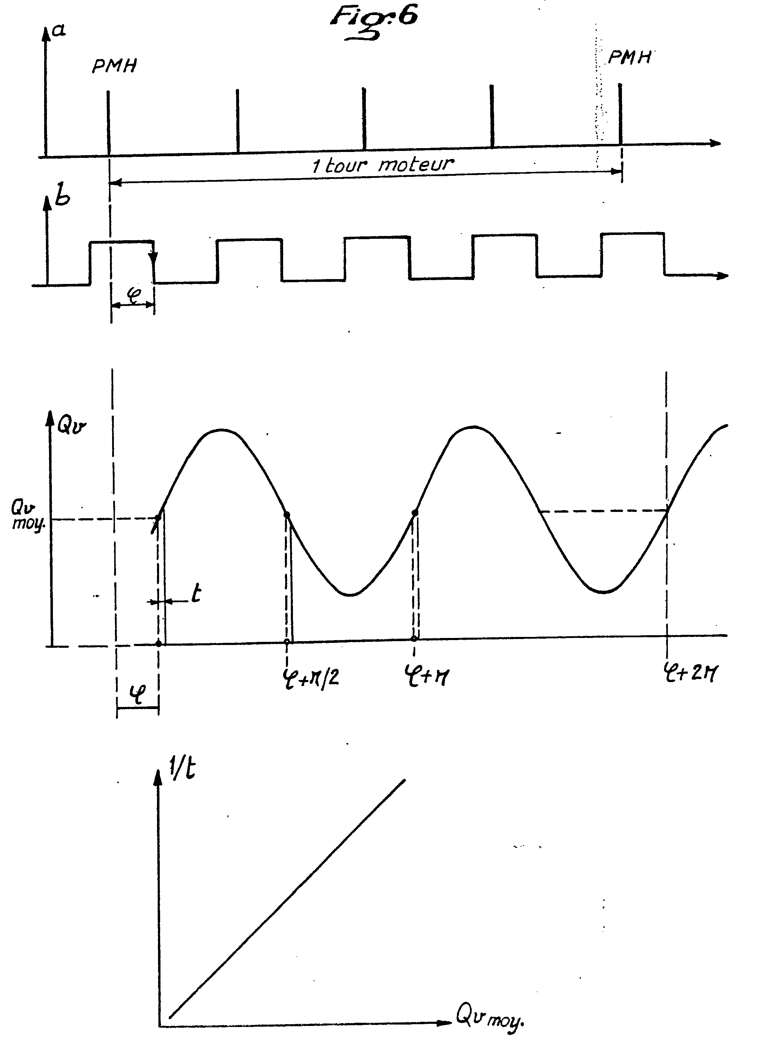

Ce dispositif 6 délivre en sortie sur une connexion 8 un signal repéré e pendant un temps t inversement proportionnel au débit volumique moyen $Qv_{moy}$ selon les courbes des figs 4 et 6 explicitées dans la suite de l'exposé.

Un volant 9 solidaire du vilebrequin du moteur comporte quatre encoches équidistantes 9a. Ces encoches 9a sont détectées par un capteur de position 10 alimentant un bloc de mise en forme 11. A la sortie du bloc 11, on obtient des impulsions repérées a dont l'espacement correspond donc à un quart de tour du vilebrequin. Ces impulsions subissent ensuite un retard angulaire par un dispositif à microprocesseur 12 et selon une loi de retard appelée loi de décalage, pour être transmises au moyen d'une connexion 13 à l'entrée des dispositifs 4 et 6. Ces impulsions décalées par rapport aux signaux a sont repérées b.

Le capteur de position 10, le bloc de mise en forme 11 et le bloc 4 délivrant les impulsions haute tension sont connus de l'homme de l'art et déjà utilisés en électronique automobile. Ils ne seront pas décrits dans la suite de l'exposé.

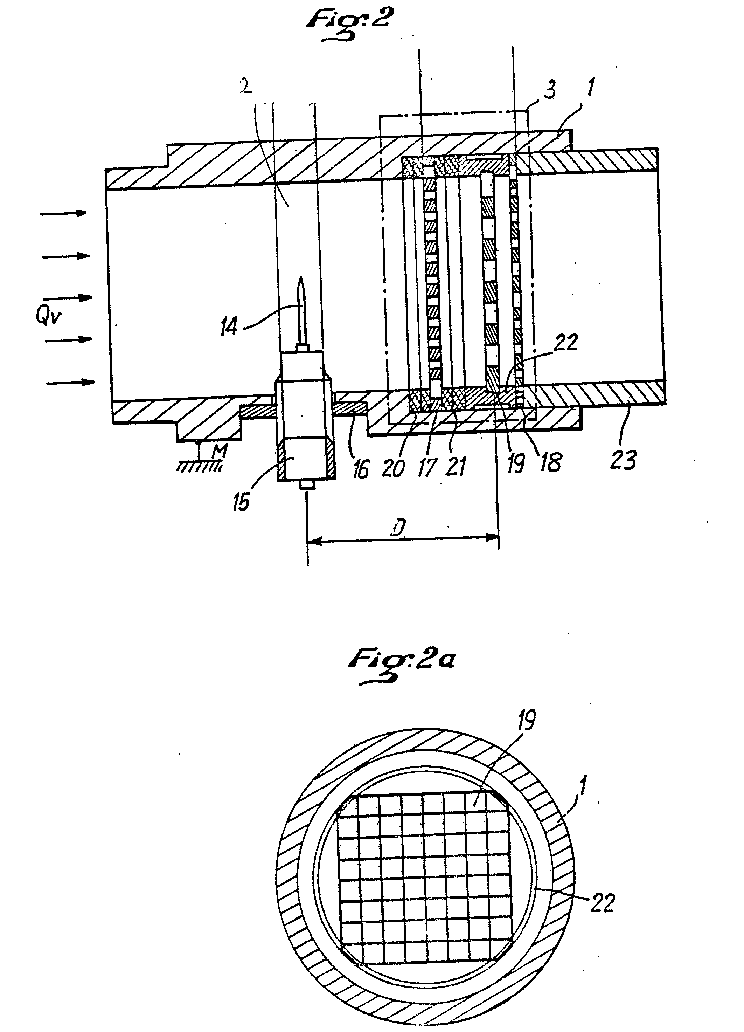

Sur la représentation schématique de la fig. 2, on trouve les éléments constitutifs des zones d'émission 2 et de réception 3 représentées à la fig. 1.

La zone d'émission 2 est composée d'un système d'émission par ionisation 14, utilisant l'effet de pointe bien connu de l'homme de l'art. Ce système 14 est maintenu dans l'écoulement gazeux par une traversée isolante 15 vissée dans le corps métallique 1 et immobilisée en rotation par un écrou 16.

La zone de réception 3 se compose de deux grilles 17 et 18 situées de part et d'autre de la grille de réception 19.

La grille 17 se présente sous la forme d'un grillage métallique à fines mailles serré entre deux cales métalliques 20 et 21. Cette grille 17 a un double rôle. D'abord, elle sert de blindage électrostatique entre la grille réceptrice 19 et le système d'émission 14. De ce fait, la grille 19 ne se trouve pas influencée par le champs électrique existant entre la partie 14 et la partie intérieure du corps 1 du capteur relié à la masse. Ensuite, la grille 17 possède un tissage à fines mailles ce qui lui permet de casser les tourbillons provoqués par le sillage de l'organe central 14 et la partie interne au capteur de la traversée isolante 15. La grille 17 a donc un rôle de régulateur d'écoulement aérodynamique ce qui améliore la stabilité du signal électrique créé par l'influence du nuage d'ions lors de son passage devant la grille 19.

La grille 18, située en aval de la grille 19, est également composée d'un grillage métallique à fines mailles du même type que celui de la grille 17 précédemment décrit. La grille 18 possède un role de blindage électrostatique vis-à-vis de la grille réceptrice 19; elle permet également d'améliorer la forme du signal induit sur la grille de réception.

La grille de réception 19, telle qu'elle est représentée à la fig. 2a, se compose également d'un grillage dont les mailles sont plus grosses que celles des grilles de blindage 17 et 18. Cette grille 19 est enchassée dans un anneau isolant 22, elle est reliée électriquement à une prise de sortie, non représentée sur la figure, permettant ainsi de sortir les signaux induits. Cette grille 19 est maintenue à l'intérieur de l'anneau 22 en quatre zones de maintien telles que représentées à la fig. 2a de façon à réduire au maximum les capacités parasites. Il est à remarquer que cette grille 19, sur laquelle est induit un signal électrique par influence d'un nuage d'ions en déplacement, possède une forme non obligatoirement circulaire.

Des cales métalliques repérées 20 et 21, situées de part et d'autre de la première grille de blindage 17, permettent de régler la distance D entre le système d'émission 2 et le système de réception 3.

Le système de réception 3 composé des grilles métalliques 17, 18 et 19 est maintenu en place par un embout métallique 23 emmanché dans le corps 1 et constituant ainsi l'autre extrémité du capteur.

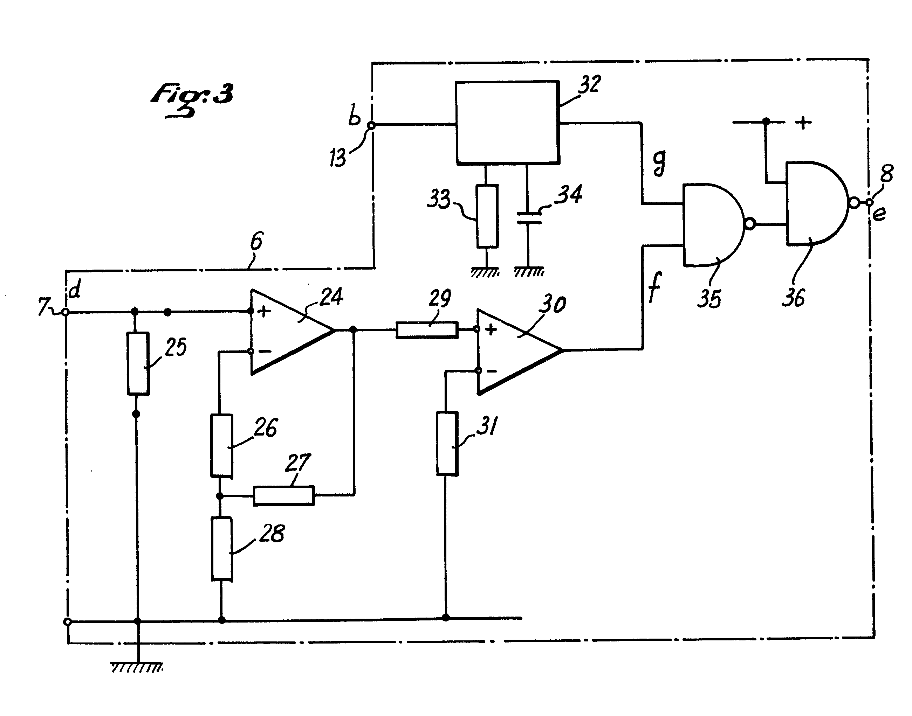

Sur la fig. 3 se trouvent représentés schématiquement les éléments essentiels du détecteur de temps de transit 6 de la fig. 1 qui délivre en sortie un signal repéré e à la fig. 4.

Le signal obtenu sur la grille réceptrice 19 et repéré d à la fig. 4 est transmis par le connexion 7 sur la borne positive d'un amplificateur opérationnel 24. L'impédance d'entrée de cet élément 24 est déterminée par les résistances 25 et 26. Le gain de l'amplificateur 24 est fonction des résistances 27 et 28. Le signal amplifié issu de 24 est transmis sur un amplificateur repéré 30 par l'intermédiaire d'une résistance 29 reliée à la borne positive. La borne négative de 30 est reliée à la masse par une résistance 31, ce qui réalise ainsi un étage comparateur à zéro. A la sortie du comparateur 30, on obtient un signal repéré f à la fig. 4. Si l'on considère $t_0$ comme origine du temps, c'est-à-dire l'instant où l'on envoie l'ordre de commande, repéré b, du module haute tension, et $t_1$ comme l'instant où le signal recueilli sur la grille 19 et repéré d passe par zéro, la largeur du signal repéré f est donc t1-t0. Le signal repéré c à la fig. 4 représente l'impulsion de haute tension envoyée sur le système d'émission 14. L'ionisation provoquée par cette haute tension n'a lieu en réalité que pendant un temps $\Delta t0$ correspondant à une haute tension supérieure à un seuil VO. Il y a donc un retard entre l'ordre de commande de la haute tension et la création effective du nuage d'ions pendant un temps $\Delta t0$. La largeur du signal repéré f et égale à t1–t0 doit donc être corrigée pour tenir compte de ce retard à l'ionisation. Le bloc 32, comportant les éléments 33 et 34, commandé par l'ordre repéré b et véhiculé par la connexion 13, fig. 1, est chargé de générer ce retard.

Le bloc 32 est un étage monostable, de type connu en soi, dont le signal de sortie g passe à l'état 0 pendant un temps $\Delta t$ à partir de l'ordre de commande b. Les signaux repérés f et g, issus respectivement de 30 et 32, sont envoyés sur deux portes logiques «NAND» successives 35 et 36. Le signal de sortie e, véhiculé par la connexion 8, fig. 1, se présente donc sous la forme d'un signal carré de largeur $t = t1–\Delta t$. Le phénomène de retard à l'émission du nuage d'ions est ainsi compensé dans la mesure du temps de transit réel. Cette disposition permet ainsi d'avoir en sortie une largeur du signal t, fonction du débit Qv, selon une relation strictement linéaire $1/t = k.Qv_{moy}$ (k étant une constante) telle que représentée à la fig. 6.

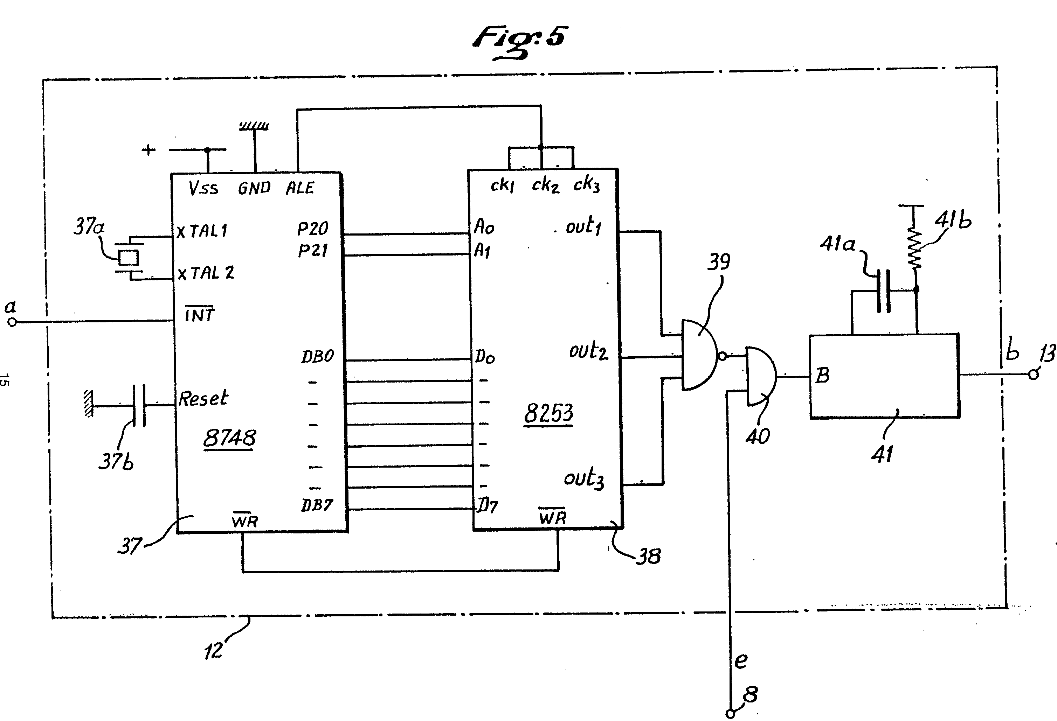

La fig. 5 représente schématiquement les éléments essentiels du bloc 12 de la fig. 1. Ce bloc 12 est chargé de délivrer des signaux repérés b décalés en retard d'un angle $\varphi$ par rapport aux signaux en provenance du volant moteur et repérés a. L'angle de retard $\varphi$ généré par l'élément 12 est fonction de la vitesse du volant moteur selon une relation du type $\varphi = -\varphi_o + kN$ (N étant la vitesse moteur et k étant une constante). Le bloc 12 comprend quatre modules.

Le module 37 est l'élément principal du système de génération de signaux décalés. Il est réalisé avec un microprocesseur du type 8748. Celui-ci intègre sa mémoire de programme, une mémoire RAM nécessaire au calcul du retard et un compteur. Le séquencement du programme est assuré par un quartz référencé 37a. L'élément repéré 37b est une capacité dont le rôle est d'initialiser le microprocesseur à la mise sous tension.

L'angle de retard à générer est fonction de la vitesse moteur, pour calculer ce retard le microprocesseur doit connaître celle-ci en permanence. Pour ce faire, il dispose d'un compteur permettant de quantifier le temps entre deux impulsions de volant moteur repérées a. Ces impulsions sont appliquées sur l'entrée $\overline{INT}$ du microprocesseur et sont actives sur le niveau bas. Le microprocesseur contrôle en permanence cette entrée. Lors du passage à l'état bas du signal, le microprocesseur vérifie une seconde fois l'état du signal: si celui-ci est encore à l'état bas le signal référencé a est validé; dans le cas contraire, il est ignoré et une nouvelle mesure est recommencée.

Cette procédure est nécessaire afin d'éliminer d'éventuels parasites présents sur cette entrée. A chaque impulsion validée, le compteur est arrêté; son contenu correspond à la période du signal volant moteur. Celui-ci est sauvegardé en mémoire, le compteur est remis à zéro, puis redéclenché pour une nouvelle mesure. Il ne reste plus alors au microprocesseur qu'à en déduire le retard. Pour ce faire, il dispose en mémoire programme d'un tableau $\varphi = -\varphi_o + kN$ (N vitesse moteur). Ainsi le microprocesseur n'a plus qu'à lire en mémoire le retard à l'aide du contenu du compteur. Toutefois, le nombre de points mémorisés est limité; il est donc nécessaire d'effectuer un calcul d'interpolation. Le microprocesseur cherche alors en mémoire les retards inférieur et supérieur incluant le retard vrai correspondant à la période de la vitesse moteur calculée. Par interpolation linéaire, il en déduit le retard exact. Ce calcul terminé le microprocesseur transmet le résultat au module référencé 38. Après cette opération, le microprocesseur recommence une nouvelle procédure de mesure et de calcul.

Le module 38 a pour rôle d'apporter le retard aux impulsions volant moteur. Pour ce faire, l'élément 38 est réalisé avec trois compteurs intégrés du type 8253 et programmables séparément.

L'utilisation de plusieurs compteurs est nécessaire du fait que les retards générés sont supérieurs à 90°; avec trois compteurs les retards maximum sont de 270°. La procédure de chargement des compteurs est réalisée sous contrôle du microprocesseur. Celui-ci transmet plusieurs informations au module 38.

La sortie $\overline{WR}$ du microprocesseur est activée informant ainsi le module 38 que le microprocesseur va transmettre des informations. Les sorties référencées P20 et P21 sont activées, elles déterminent le compteur à charger; la donnée précédemment calculée par le microprocesseur est enfin transmise par ses sorties repérées DB0 à DB7, le microprocesseur supprime l'information sur sa sortie $\overline{WR}$ signalant ainsi au module 8253 que la procédure de chargement est terminée. Le compteur sélectionné est alors décrémenté par l'intermédiaire d'une horloge présente sur son entrée CK et provenant de la sortie ALE du microprocesseur.

Au passage par zéro de ce compteur, celui-ci active sa sortie correspondante OUT en la maintenant à un niveau bas durant une période d'horloge (ALE).

L'élément référencé 39 est une porte «NAND» à trois entrées dont le rôle est de sommer les trois sorties OUT du module 38 et d'en inverser la parité.

L'élément 40 est une porte ET à deux entrées. Elle reçoit sur l'une d'elles la sortie du module 39 et sur l'autre l'information référencée e provenant du module 6, fig. 1. Le rôle du module 40 est d'éviter le déclenchement d'une nouvelle mesure de débit si celle précédemment entamée n'est pas terminée. Le cas peut se présenter lors de débits très faibles et vitesse moteur élevée (décélération du moteur).

Le module 41 est un monostable de réalisation connu en soi. Il fournit une impulsion calibrée référencée par les éléments 41a et 41b. Cette impulsion est générée chaque fois que son entrée B est activée. Elle est transmise au module de haute tension 4 par la liaison 13, fig. 1.

L'utilisation d'un microprocesseur dans le bloc 12 précédemment décrit permet de créer des re-

tards de la forme φ = f (kN) (N étant la vitesse moteur) de n'importe quel type. Toutefois, le système peut être simplifié pour un type particulier de courbe. En effet, la courbe φ = −φ₀ + kN peut se décomposer en une phase constante φ₀ plus un retard constant T₀.

Ce retard T₀ se traduit en fait par une phase φ égale à:

$$\varphi = 90 \frac{T_o}{T_{mot}}$$

(T$_{mot}$ étant la période de la vitesse moteur)

nous avons:

$$N = \frac{60}{4.T_{mot}} \text{ (correspondant à cible 4 dents)}$$

l'équation devient alors:

$$90 \frac{T_o}{T_{mot}} = k \frac{60}{4.T_{mot}} \text{ d'où:}$$

$$T_o = \frac{k}{6}$$

La phase constante φ₀ peut être réalisée mécaniquement en décalant le capteur volant moteur d'un angle φ₀.

Le retard constant T₀ est réalisé électroniquement à partir d'éléments du type monostable de réalisation connue en soit. Ces monostables, au nombre de trois, seront déclenchés séparément une fois toutes les trois impulsions du volant moteur. Ainsi l'emploi du microprocesseur, référencé 37, et des compteurs, référencés 38, n'est alors plus nécessaire.

## Revendications

1. Capteur ionique de débit d'air à temps de transit entre une zone d'émission (1) par ionisation et une zone de réception (3) associées respectivement à un générateur (4) d'impulsions à haute tension comportant des moyens de déclenchement (9, 9a, 10) liés à la position d'un vilebrequin moteur, de mise en forme (11) et de commande par microprocesseur (12) réglés de manière à permettre la mesure d'un débit pulsé à des instants privilégiés correspondant au passage à la valeur moyenne Qv$_{moy}$ du débit volumique, et à un détecteur (6) de temps de transit des particules ionisées, dans lequel une grille (19) de réception appartenant à la zone de réception (3) est protégée par un blindage électrostatique (17, 18) transparent aux particules ionisées et l'ensemble des moyens de réception (17, 18, 19) est amovible et réglable en position relativement au sens d'écoulement des particules ionisées, ledit détecteur (6) de temps de transit comprenant en outre des moyens (32, 33, 34) pour engendrer un retard (Δt) sur la mesure du temps de transit t entre zone d'émission et zone de réception permettant de linéariser la courbe 1/t = f(Qv$_{moy}$).

2. Capteur selon la revendication 1, caractérisé en ce que la zone de réception (3) comprend une électrode (19) qui est une grille de forme non circulaire enchassée dans un anneau isolant (22) en un nombre discret de points, de mailles plus grosses que celles des grilles de blindage (17, 18.

3. Capteur selon l'une quelconque des revendications 1 et 2, caractérisé en ce que le blindage électrostatique comprend deux grilles métalliques (17, 18) à fines mailles, disposées parallèlement de part et d'autre de la grille de réception (19) et réglées en position longitudinalement par des cales métalliques (20, 21, 23).

4. Procédé de mesure du débit volumique moyen d'air d'un moteur à l'aide d'un capteur suivant l'une quelconque des revendications 1 à 3, caractérisé en ce que l'on engendre, entre la position du vilebrequin et l'instant de la mesure du débit moyen, un retard angulaire de la forme φ = −φ₀ + kN, équation dans laquelle φ₀ est un angle constant, N est la vitesse moteur et k est une constante.

5. Procédé de mesure suivant la revendication 4, caractérisé en ce que le retard angulaire de la forme φ = −φ₀ + kN est réalisé en décalant un capteur (10) associé au vilebrequin (8) d'un angle constant (φ₀) et en ce que l'on réalise un retard constant (T₀) équivalent à kN, à l'aide d'éléments électroniques du type monostable.

## Claims

1. An ionic air flow rate detector having a transit time between a region (2) of emission by ionisation and a reception region (3), which are respectively associated with a high voltage pulse generator (4) comprising trigger means (9, 9a, 10) which are linked to the position of en engine crankshaft, shaping means (11) and microprocessor control means (12) which are so regulated as to permit the measurement of a pulsed flow at privileged times corresponding to the attainment of the mean value (Qv$_{moy}$) of the volume flow rate, and an ionised particle transit time detector (6) in which a reception grid (19) belonging to the reception region (3) is protected by electrostatic shielding (17, 18) which is transparent with respect to the ionised particles, and the assembly of the reception means (17, 18, 19) is removable and adjustable in position relative to the direction of flow of the ionised particles, said transit time detector (6) further comprising means (32, 33, 34) for producing a delay (Δt) on the measurement of the transit time t between emission region and reception region, permitting the curve 1t = f (Qv$_{moy}$) to be linearised.

2. A detector according to claim 1 caracterised in that the reception region (3) comprises an electrode (19) which is a grid of non-circular form which is mounted in an insulating ring (22) at a discrete number of points, with meshes which are larger than those of the shielding grids (17, 18).

3. A detector according to either one of claims 1 and 2 characterised in that the electrostatic shielding comprises two fine-mesh metal grids (17, 18) which are disposed in parallel relationship on respective sides of the reception grid (19) and which are adjusted in respect of longitudinal position by metal packing members (20, 21, 23).

4. A process for measuring the mean air flow rate by volume of an engine by means of a detector according to any one of claims 1 to 3 characterised in that, between the position of the crankshaft and the time of measurement of the mean flow rate, an angular delay of the form $\varphi = -\varphi_o + kN$ is produced, in which equation $\varphi_o$ is a constant angle, N is the engine speed and k is a constant.

5. A measuring process according to claim 4 characterised in that the angular delay of the form $\varphi = -\varphi_o + kN$ is produced by displacing a detector (10) associated with the crankshaft (8) by a constant angle ($\varphi_o$) and that a constant delay ($T_o$) equivalent to kN is produced by means of electronic elements of the monostable type.

**Patentansprüche**

1. Messwertaufnehmer zum Messen einer Luftmenge mittels Messung der Laufzeit von Ionen zwischen einer Ionisationssendezone (2) und einer Empfangszone (3), die einem Generator (4) für Hochspannungsimpulse zugeordnet sind, der eine mit der Stellung einer Motorkurbelwelle verbundene Auslöseanordnung (9, 9a, 10) aufweist, eine Umformungs- und Steueranordnung (11) mittels Mikroprozessor (12) aufweist, welche derart gesteuert sind, dass die Messung einer pulsierenden Menge zu vorgegebenen Zeitpunkten ermöglicht wird entsprechend dem Durchgang des Mittelwerts ($Qv_{moy}$) der Volumenmenge, bzw. einem Detektor (6) für die Laufzeit der ionisierten Teilchen zugeordnet sind, in dem ein Empfangsgitter (19), das zur Empfangszone (3) gehört, durch eine elektrostatische Abschirmung (17, 18) geschützt ist, die für die ionisierten Teilchen durchlässig ist, wobei die Gesamtheit der Empfangsanordnung (17, 18, 19) abnehmbar und in ihrer Stellung zur Bewegungsrichtung der ionisierten Teilchen einstellbar ist und der Detektor (6) für die Laufzeit ausserdem eine Anordnung (32, 33, 34) aufweist um eine Verzögerung ($\Delta t$) in der Laufzeitmessung zwischen Sendezone und Empfangszone zu erzeugen zur Linearisierung der Kurve $1/t = f(Qv_{moy})$.

2. Messwertaufnehmer nach Anspruch 1, dadurch gekennzeichnet, dass die Empfangszone (3) eine Elektrode (19) aufweist, die die Form eines nicht kreisförmigen Gitters aufweist, das an einer Anzahl voneinander getrennter Stellen in einen isolierenden Ring (22) eingesetzt ist und dessen Maschen grösser sind als diejenigen der Abschirmgitter (17, 18).

3. Messwertaufnehmer nach einem der Ansprüche 1 und 2, dadurch gekennzeichnet, dass die elektrostatische Abschirmung zwei Metallgitter (17, 18) mit kleinen Maschen aufweist, die parallel zueinander und beidseits des Empfangsgitters (19) angeordnet sind und in Längsrichtung mittels metallischer Zwischenstücke (20, 21, 23) einstellbar sind.

4. Verfahren zur Messung der mittleren Laufdurchsatzleistung eines Motors mittels eines Messwertaufnehmers nach einem der Ansprüche 1 bis 3, dadurch gekennzeichnet, dass zwischen der Stellung der Kurbelwelle und dem Messzeitpunkt des mittleren Durchsatzes eine Winkelverzögerung der Form $\varphi = -\varphi_o + kN$ erzeugt wird, wobei in der Gleichung mit $\varphi_o$ ein konstanter Winkel, mit N die Motorgeschwindigkeit und mit k eine Konstante bezeichnet sind.

5. Messverfahren nach Anspruch 4, dadurch gekennzeichnet, dass die Winkelverzögerung der Form $\varphi = -\varphi_o + kN$ durch Verschiebung eines der Kurbelwelle (8) zugeordneten Fühlers (10) um einen konstanten Winkel $\varphi_o$ erzeugt wird und dass eine konstante Verzögerung $T_o$ die äquivalent zu kN ist, mit Hilfe von elektronischer monostabiler Bauteile erzeugt wird.

Fig.1

0 049 195

Fig. 2

Fig. 2a

Fig.3

Fig.4

0 049 195

Fig:5

0 049 195

Fig.6